# EUROPEAN PATENT APPLICATION

(11) **EP 0 540 219 A2**
(43) Date of publication of application: **05.05.1993**
(21) Application number: 92309522.8
(22) Date of filing: 19.10.1992
(51) Int. Cl.: H04M 3/24, H04Q 1/24, H04Q 11/04

(54) **Telecommunication interconnection testing**

(30) Priority: 01.11.1991 GB 9123211
(71) Applicant: GPT LIMITED, Coventry, CV3 1HJ (GB)
(72) Inventor: Skinner, Ian John, Wimborne, Dorset BH21 3QU (GB); Player, Gary, Poole, Dorset BH17 8AH (GB)
(74) Representative: Branfield, Henry Anthony

(57) **Abstract**

A method of testing a telecommunications switch system having a space-time-space configuration, comprises the steps of interconnecting the transmission links of the space switches and programming the timeslots of the time switches so as to provide a continuous path through the system, injecting a test signal into the first receive timeslot of the system and monitoring the receipt of the test signal at the first transmit timeslot of the system, after having traversed all the timeslots of the system, after a specified delay.

## Description

When commissioning or fault finding on a telecommunication system, it is frequently necessary to check out the system interconnections, such as the distribution frame cabling Digital Line Terminations (DLT) and links to the switch. Such interconnections are becoming increasingly complex with the advances in telecommunications and an improved means of testing is becoming essential.

The present invention will be described with reference to Pulse Code Modulation (PCM) cabling on the distribution frame, this being currently the commonest system in use. However, the invention is capable of application to other systems and to fibre optics interconnections.

According to the present invention there is provided a method of testing a telecommunications switch system having a space-time-space configuration, comprising the steps of interconnecting the transmission links of the space switches and programming the timeslots of the time switches so as to provide a continuous path through the system, injecting a test signal into the first receive timeslot of the system and monitoring the receipt of the test signal at the first transmit timeslot of the system, after having traversed all the timeslots of the system, after a specified delay.

A first embodiment provides a method of testing a telecommunications switch system in which the system comprises a plurality of transmission links, each link having input and output receive connections and input and output transmit connections, the input connections being connected to respective receive and transmit connections of a switch, there being a plurality of timeslots extending between each output receive connection and its respective output transmit connection, via the link and the switch, comprising the steps of connecting each output transmit connection to its respective output receive connection with the exception of the first of the links, connecting a control means to the output connections of the first of the links, whereby in response to an output of the control means the switch connects each input receive connection of the links to the input transmit connection of an alternative link so as to form a continuous loop and the control means connects the output transmit connection and the output receive connection of the first of the links with respect to all the timeslots thereof except a first timeslot and injects a test pattern into said first timeslot of the output receive connection and monitors the receipt of the test pattern at the first timeslot of the output transmit connection after having traversed the timeslots of all the links and the switch after a specified delay.

A second embodiment provides a method of testing a telecommunications switch system in which the systems comprises a plurality of transmission links, each link having input and output receive connections and input and output transmit connections, the input connections being connected to respective receive and transmit connections of a switch, there being a plurality of timeslots extending between each output receive connection and its respective output transmit connection, via the link and the switch, comprising the steps of connecting the output transmit connection of the first of the links to its respective output receive connection, and connecting each further output transmit connection to a further output receive connection, connecting a control means to the output connections of the first of the links, whereby in response to an output of the control means the switch connects each input receive connection of the links to the input transmit connection of an alternative link so as to form a continuous loop and the control means connects the output transmit connection and the output receive connection of the first of the links with respect to all the timeslots thereof except a first timeslot and injects a test pattern into said first timeslot of the output receive connection and monitors the receipt of the test pattern at the first timeslot of the output transmit connection after having traversed all the timeslots of all the links and the switch after a specified delay.

The present invention will now be described, by way of example, with reference to the accompanying drawings, in which:-
Figure 1 is a diagrammatic view of a first embodiment of the present invention;
Figures 2A-2D show an algorithm for use with the embodiment of Figure 1; and
Figure 3 shows a diagrammatic view of a second embodiment of the present invention.

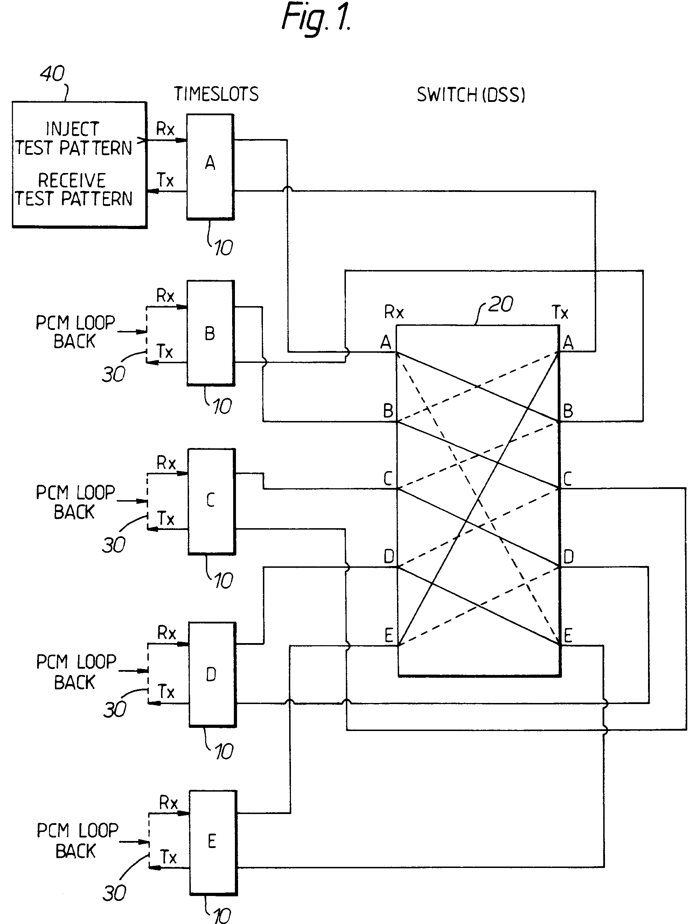

Considering the embodiment of Figure 1, which shows a series of transmission links such as timeslots in PCM's 10 A, B, C, D and E each having receive and transmit connections (Rₓ, Tₓ) and having a plurality of timeslots, which are connected to a switch 20 having respective receive and transmit connections to the timeslots of the PCM's 10.

Typically the system might conform to the Mark II Digital Switching Sub system (DSS Mark II) in System X.

Loop back connections 30 are used to connect the transmit and receive connections of each of the timeslots, except the first timeslot of the first PCM 10.

A control means test unit 40 is connected to Tₓ and Rₓ of the first PCMA. The function of the test unit 40 is to send and receive the necessary switch request information to and from the system to control the first PCM pair A of the distribution frame so that all Rₓ timeslots may be looped back onto their respective Tₓ timeslots with the exception of timeslot 1; to inject a test pattern into timeslot 1 of the first PCMA Rₓ and to confirm its receipt on timeslot 1 of the PCMA Tₓ after a specified delay.

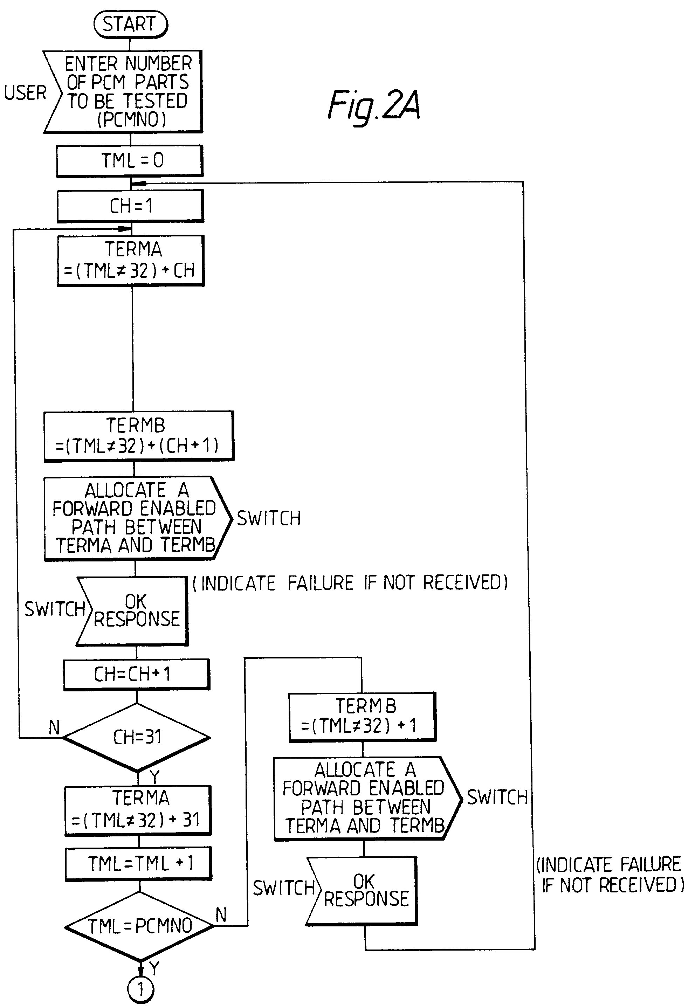

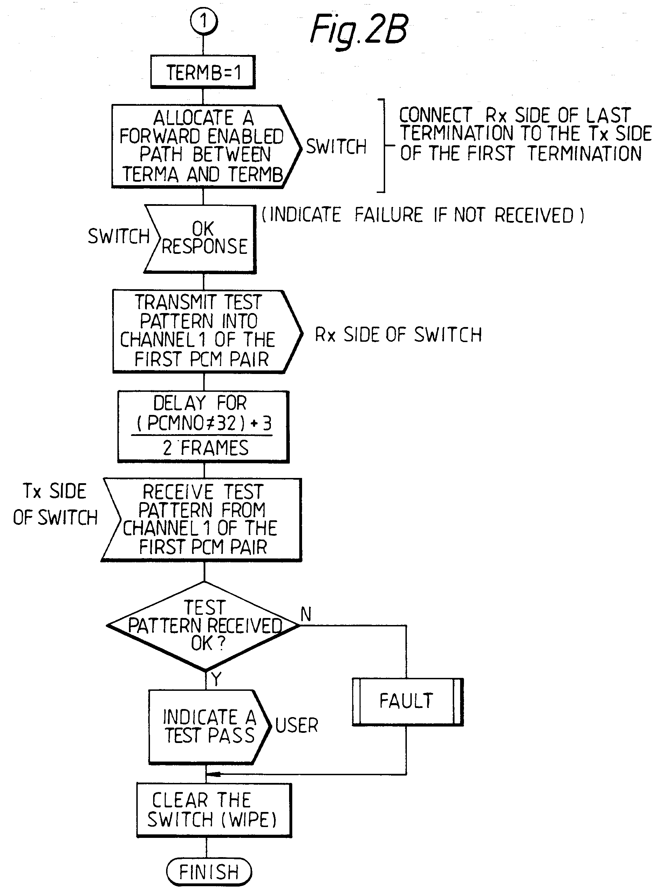

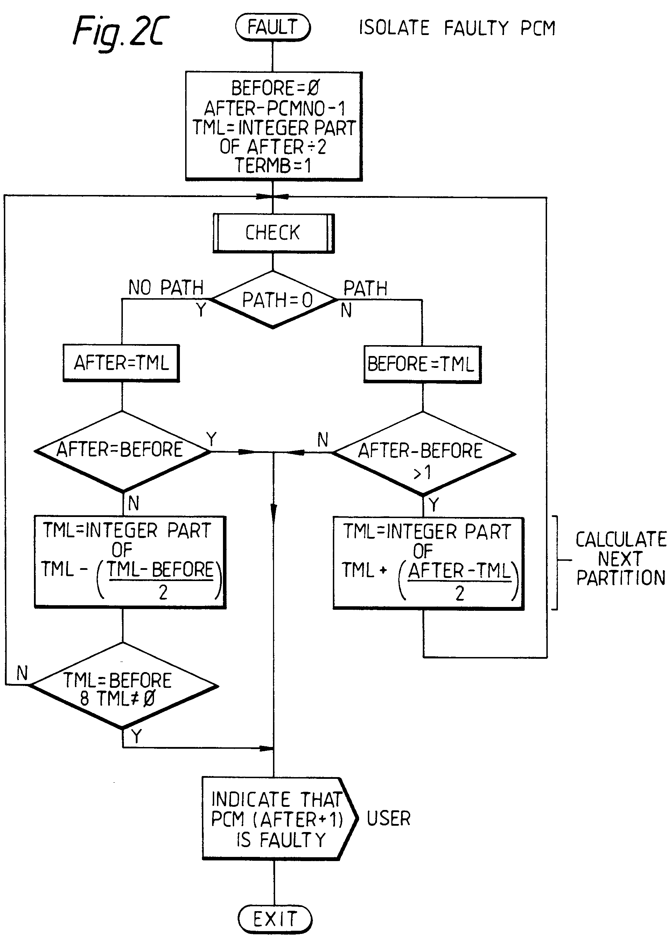

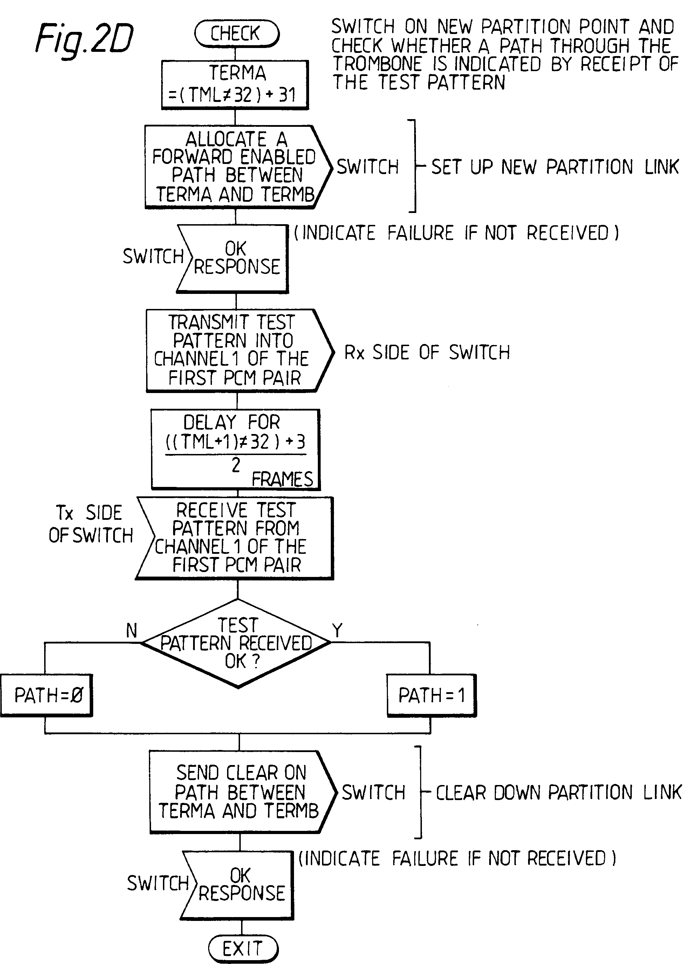

The controlling algorithm for the test unit 40 is shown in Figures 2A-2D. The user will be prompted for entry of the number of PCM's connected. On completion of the test the test unit 40 will indicate either a confirmation that the test has been completed successfully or the PCM pair on which a fault was found. In the case of multiple faults then only the first faulty PCM found will be indicated.

Isolation of the faulty PCM is by successive partitioning. If failure occurs on the initial test then the mid-point PCM is switched back to the beginning to determine which half of the switch has the fault. The faulty half is then halved again and the procedure repeated until the fault is isolated to a single PCM position.

This PCM can then be examined to determine the fault, rectified and retested.

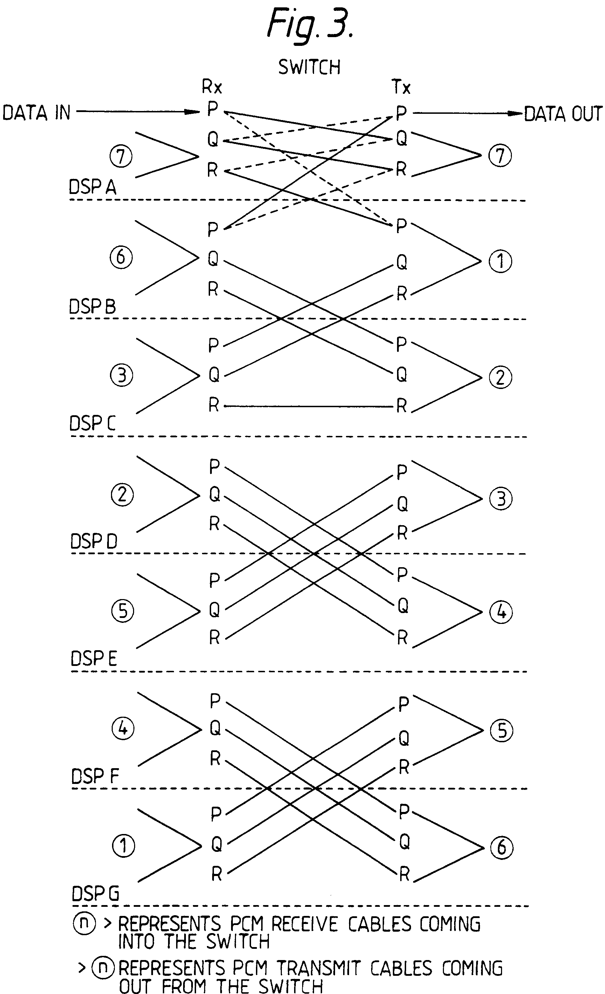

In the alternative embodiment in Figure 3, a number of transmission links and switches, designated as DSP's [DS(S)-P(CM)], DSPA-DSPG are shown, each having individual channels or timeslots P, Q, R. The timeslots P, Q, R are representative of the typically, 31 timeslots on each PCM, timeslot 0 not normally being included.

'n' indicates the loop relationship to be established using cables on the Intermediate Digital Distribution Frame (IDDF).

A test unit 40 as before (not shown in Figure 3) generates and monitors the data stream on the first timeslot of the first PCM and must also loop the transmit and receive sides for each of the other timeslots on that PCM.

If an even number of DSP's are selected for inclusion in the loop, then the first and second DSP's, DSPA, DSPB will be configured as for DSPA, with DSPB looped transmit to receive via cable on the IDDF. The return path between DSPA, channel P and DSPB, channel P will not be included in the configuration of DSPB.

## Claims

1. A method of testing a telecommunications switch system having a space-time-space configuration, comprising the steps of interconnecting the transmission links of the space switches and programming the timeslots of the time switches so as to provide a continuous path through the system, injecting a test signal into the first receive timeslot of the system and monitoring the receipt of the test signal at the first transmit timeslot of the system, after having traversed all the timeslots of the system, after a specified delay.

2. A method of testing a telecommunications switch system as claimed in Claim 1, in which the system comprises a plurality of transmission links, each link having input and output receive connections and input and output transmit connections, the input connections being connected to respective receive and transmit connections of a switch, there being a plurality of timeslots extending between each output receive connection and its respective output transmit connection, via the link and the switch, comprising the steps of connecting each output transmit connection to its respective output receive connection with the exception of the first of the links, connecting a control means to the output connections of the first of the links, whereby in response to an output of the control means the switch connects each input receive connection of the links to the input transmit connection of an alternative link so as to form a continuous loop and the control means connects the output transmit connection and the output receive connection of the first of the links with respect to all the timeslots thereof except a first timeslot and injects a test pattern into said first timeslot of the output receive connection and monitors the receipt of the test pattern at the first timeslot of the output transmit connection after having traversed the timeslots of all the links and the switch after a specified delay.

3. A method of testing a telecommunications switch system as claimed in Claim 1, in which the system comprises a plurality of transmission links, each link having input and output receive connections and input and output transmit connections, the input connections being connected to respective receive and transmit connections of a switch, there being a plurality of timeslots extending between each output receive connection and its respective output transmit connection, via the link and the switch, comprising the steps of connecting the output transmit connection of the first of the links to its respective output receive connection, and connecting each further output transmit connection to a further output receive connection, connecting a control means to the output connections of the first of the links, whereby in response to an output of the control means the switch connects each input receive connection of the links to the input transmit connection of an alternative link so as to form a continuous loop and the control means connects the output transmit connection and the output receive connection of the first of the links with respect to all the timeslots thereof except a first timeslot and injects a test pattern into said first timeslot of the output receive connection and monitors the receipt of the test pattern at the first timeslot of the output transmit connection after having traversed all the timeslots of all the links and the switch after a specified delay.
